# EUROPEAN PATENT SPECIFICATION

(11) **EP 0 733 966 B1**
(45) Date of publication and mention of the grant of the patent: **25.08.2004**
(21) Application number: 95301980.9
(22) Date of filing: 24.03.1995
(51) Int. Cl.: G06F 9/44, G06F 11/22

(54) **Methods and apparatus for monitoring events and implementing corrective action in a computer system**
Verfahren und Anlage zur Ereignisüberwachung und Korrekturaktionsimplementierung in einem Rechnersystem
Méthode et dispositif de surveillance d'événements et d'implémentation d'actions de correction dans un système de calculateur

(43) Date of publication of application: 25.09.1996
(73) Proprietor: Hewlett-Packard Company, A Delaware Corporation, Palo Alto, CA 94304 (US)
(72) Inventor: Eshghi, Kave, Redland, Bristol BS6 7LW (GB); Moreau, Jean-Jacques, Bradley Stoke, Bristol BS12 8AJ (GB)
(74) Representative: Coker, David Graeme

(56) References cited:
- US-A- 5 159 685
- IBM JOURNAL OF RESEARCH AND DEVELOPMENT, JAN. 1986, USA, vol. 30, no. 1, ISSN 0018-8646, pages 14-28, ENNIS R L ET AL 'A continuous real-time expert system for computer operations'
- PROCEEDINGS OF THE CONFERENCE ON ARTIFICIAL INTELLIGENCE APPLICATIO, MIAMI BEACH, FEB. 24 - 28, 1991, vol. VOL. 1, no. CONF. 7, 24 February 1991 INSTITUTE OF ELECTRICAL AND ELECTRONICS ENGINEERS, pages 389-392, XP 000299010 SE YOUNG PARK ET AL 'OASIX: A REAL-TIME KNOWLEDGE-BASED SYSTEM FOR UNIX OPERATIONS AND ADMINISTRATION'
- PROCEEDINGS OF THE ANNUAL INTERNATIONAL PHOENIX CONFERENCE ON COMPUTERS AND COMMUNICATIONS, SCOTTSDALE, MAR. 21 - 23, 1990, no. CONF. 9, 21 March 1990 INSTITUTE OF ELECTRICAL AND ELECTRONICS ENGINEERS, pages 667-674, XP 000144600 TOSHIHARU SUGAWARA 'A COOPERATIVE LAN DIAGNOSTIC AND OBSERVATION EXPERT SYSTEM'
- PROCEEDINGS OF THE ANNUAL INTERNATIONAL PHOENIX CONFERENCE ON COMPUTERS AND COMMUNICATIONS, SCOTTSDALE, APR. 1 - 3, 1992, no. CONF. 11, 1 April 1992 INSTITUTE OF ELECTRICAL AND ELECTRONICS ENGINEERS, pages 387-394, XP 000319386 HOEFFMANN A ET AL 'CONTROL REASONING BASED ON GOAL RELATIONSHIPS WITHIN THE BLACKBOARD FRAMEWORK QBB'

## Description

### Technical Field

This invention relates to a method and apparatus for monitoring occurrence of events which may affect availability of services (such as electronic mail and print spooling) intended to be provided by a computer system, and for identifying and implementing corrective action which may be required to remedy effects of such events. In particular, but not exclusively, the present invention relates to a method and apparatus for monitoring events and implementing required actions in respect of services provided on a network of computers.

### Background Art

The complexity of computer systems and networks of computer systems has increased inexorably, so that such systems are now typically characterized by the presence and interaction of large numbers of system entities in providing a variety of system services. This in turn has placed a major strain on system management resources required to maintain continuous availability of system services, for example in connection with detection of faults and identification and correction of their causes.

One of the earliest expert systems which has been addressed to this issue of detecting and diagnosing computer operations in a system is described in IBM JOURNAL OF RESEARCH AND DEVELOPMENT, JAN. 1986, USA, Vol. 30, no. 1, ISSN 0018-8646, pages 14-28, ENNIS R L ET AL' A continuous real-tie expert system for computer operations'. Here a continuous real-time expert system exerts active control over a computing system and provides advice to computer operators. It provides advice on routine operations and detects, diagnoses and responds to problems in the computer operator's domain.

Another contribution to the resolution of this problem has been disclosed in WO 94/09 427, which describes a system management method and apparatus in which a respective declarative model is provided for each system service. This model specifies, independently of any particular task to be performed in relation to that service, the requirements or goals needing to be met for that service to be available, in terms of the entities required and their inter-relationships. A respective task program is provided for each task, such as installation, monitoring and fault diagnosis, for controlling performance of that task in a manner independent of any particular model, in terms of general inferencing operations that can be performed on any such model. Tasks are performed in relation to a service (e.g. fault-finding in respect of an inoperative print spooling service) by effecting inferencing operations on a declarative model relating to that service, under the control of the task program for that task.

In one implementation of the invention disclosed in WO 94/09 427 information on the system is made available through reference to a fact base which stores facts about the system and which can be updated through interaction with the system to provide desired information, either directly through queries to elicit specific items of information, or indirectly by inferencing from these items of information. An inferencing engine checks whether a requirement or goal associated with a service is being met by the system by performing inferencing operations on the relevant service model and by referring to the fact base, and, in the event that insufficient facts are present in the fact base, by causing interaction with the system to elicit further facts.

In the method and apparatus as described in WO 94/09 427 the operation of the inferencing engine is triggered by a requirement to perform a management task, typically at the request of a user to modify the system's services or to identify the cause of a service failure.

It is an object of this invention to provide a method and apparatus which enables management tasks to be initiated automatically, for example in response to detection of events indicating a possible change in the system status.

### Disclosure of Invention

According to one aspect of this invention there is provided a system management method for monitoring occurrence of and attempting to remedy effects of events affecting a service intended to be provided by a computer system made up of co-operating physical and logical entities, the method comprising: providing for the service a declarative model specifying requirements needing to be met for the service to be available, the requirements being set out in terms of the entities required and their inter-relationships; specifying in respect of at least one aspect of the service a goal to be satisfied by the system and storing the goal in a goal store; providing a fact base for holding facts relating to the system; identifying at least one fact which relates to the system and upon which the goal depends, and including that fact in the fact base; detennining whether the goal is satisfied and thereby establishing at least one link indicating a dependency relationship between the goal and the at least one fact, and including the link in the fact base; defining at least one event which can occur in the system and whose occurrence in the system can affect validity of the fact; and detecting occurrence of the event, and thereupon: determining whether the fact is valid or invalid; if the fact has become invalid, determining whether the goal is still satisfied by performing inferencing operations on the declarative model by referring to the fact base so as to ascertain whether a requirement relevant to the goal is met by the system; if the goal is no longer satisfied; seeking an operation which will enable the goal to be re-satisfied; testing whether the operation will enable said goal to be re-satisfied by temporarily updating said fact base to indicate consequences of effecting that operation, and determining whether said goal is satisfied by reference to said fact base in its temporarily updated state; and, if the goal is re-satisfied, performing the operation.

According to another aspect of the invention there is provided system management apparatus for monitoring occurrence of and attempting to remedy effects of events affecting a service intended to be provided by a computer system made up of cooperating physical and logical entities, the apparatus comprising: a declarative model specifying requirements needing to be met for the service to be available, the requirements being set out in terms of the entities required and their inter-relationships; an inference engine for carrying out inferencing operations in relation to the declarative model;a goal store containing a specification of a goal to be satisfied by the system in respect of at least one aspect of the service; a fact base for holding facts relating to the system; an identification of at least one fact which relates to the system and upon which the goal depends, the fact being included in the fact base; at least one link included in the fact base, the link being established by determining whether the goal is satisfied and indicating a dependency relationship between the goal and the at least one fact, a definition of at least one event which can occur in the system and whose occurrence in the system can affect validity of the fact; and the interference engine being arranged to detect occurrence of the event, the interference engine comprising: determining means for determining whether the fact is valid or invalid; causing means arranged to cause the inference engine to perform inferencing operations on the declarative model, to cause reference to be made to the fact base for ascertaining whether a requirement relevant to the goal is met by the system, and to determine whether the goal is still satisfied, if the fact has become invalid; and enabling means arranged to seek an operation for enabling the goal to be re-satisfied if the goal is no longer satisfied; and the apparatus further comprising performing means for performing the operation.

### Brief Description of Drawings

A method and system in accordance with this invention, for identifying events within a computer system and implementing corrective action which may be required to remedy effects of such events, will now be described, by way of example, with reference to the accompanying drawings, in which:
Figure 1 is an overview diagram of the system management apparatus embodying the invention;
Figure 2 is a diagram of an inference engine forming part of the apparatus of Figure 1;
Figure 3 is a diagram illustrating the format of a query usable to obtain information from the computer system being managed;
Figure 4 is a search tree illustrating operation of the inference engine of Figure 2 in respect of an example service model, given a set of predetermined facts;
Figure 5 is a search tree illustrating operation of the inference engine of Figure 2 in respect of the same service model as for Figure 4, where queries are used to elicit facts; and
Figure 6 is a diagram illustrating the format of an event definition usable to define events within the computer system for which resulting effects and possible corrective action are to be identified.

### Detailed Description of an Embodiment of the Present Invention

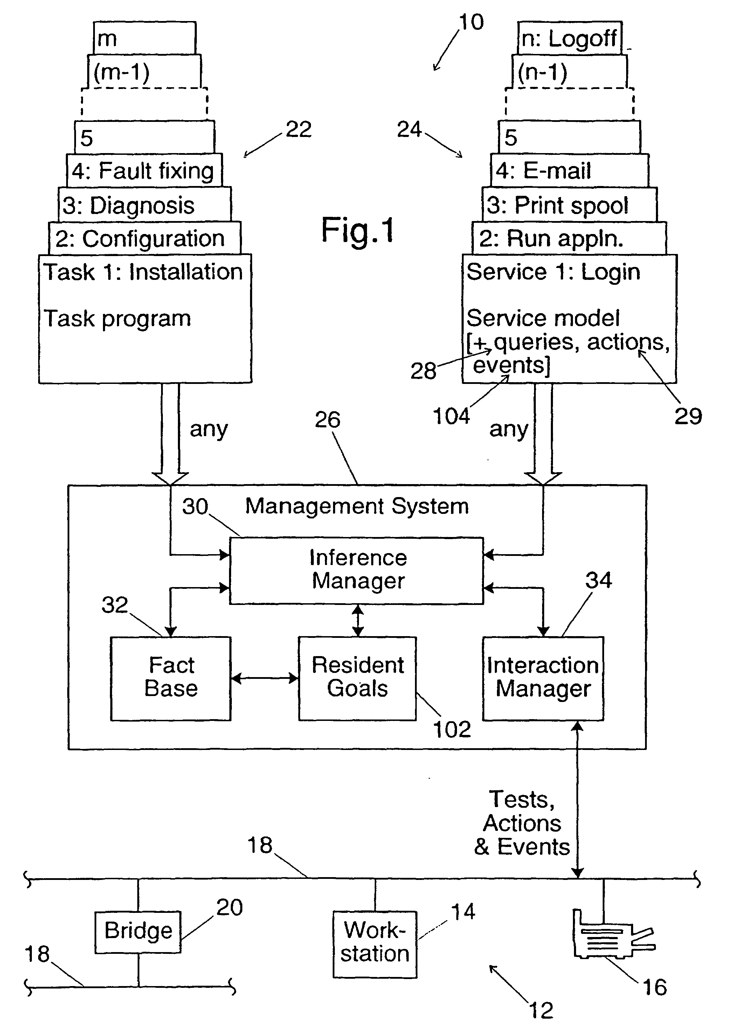

Figure 1 illustrates in general form the system management apparatus 10 of the present invention, in association with part of a computer system 12 whose operation is supervised with the aid of the apparatus 10. The system comprises work stations 14 and peripheral devices such as a printer 16, interconnected via a network including LAN segments 18 linked via bridges 20. A user at a work station 14 will typically require the system 12 to provide him/her with any of several services such as logging into the computer system, running a particular application program, print spooling, electronic mail and logging off. For each of these services a system manager needs to be able to use one of the work stations 14 to perform a variety of system management tasks, including installation of the service, configuration of the service, fault diagnosis and fault fixing, and removal of the service.

The system management apparatus 10 includes a set of task programs 22 (one for each of the *m* tasks to be performed), a set of service models 24 (one for each of the *n* services provided by the computer system 12), and a management system 26 constituted by the system manager's work station 14 and appropriate software. The task programs 22, service models 24 and parts of the management system 26 are discussed in detail in WO 94/09 427; accordingly they are described herein only to the extent necessary to assist a proper understanding of the present invention.

Each service model 24 is a declarative model of the service concerned and specifies the requirements needing to be met for the service to be available. These requirements are set out in terms of the system's physical and logical entities associated with the service (such as printers and modems, and integers, files and operating modes), and the relationships between these entities. A service model contains no information about how it is to be used for different management tasks. Associated with each service model are queries 28 and actions 29. Queries detail how information regarding the requirements specified for the service concerned may be obtained by interaction with the computer system 12. Actions detail how to initiate the carrying out of procedures which relate to the modelled service and which may be required to implement certain tasks.

As used herein, the term "declarative model" refers to an abstract description of a service, the meaning of the model being independent of any form of processing to which the model may be subject; the structure of the model, and the manner in which it is used, are not based on notions of sequence, iteration or choice (in contrast to what is typically the case with imperative models), and instead the model employs logical operators (such as AND, OR, NOT) and recursion as appropriate. Concepts of sequence, iteration and choice may well be represented in the model as part of the modelling of the service concerned but this does not affect the declarative nature of the model.

The management system 26 includes an inference engine or manager 30, a fact base 32 and an interaction manager 34. When carrying out any particular task under the control of one of the task programs 22, the inference engine 30 uses the service model 24 for the service in respect of which that task is being carried out to identify the requirements for the service, and then uses whatever information might be available to it to make certain inferences from these requirements (in particular, whether they have been met or need to be met). The fact base 32 stores facts which are already known to the management system 26 and which are therefore directly available to the inference engine 30. If desired facts are not in the fact base 32, the inference engine 30 is operative to use the queries 28 associated with the relevant service model 24 to cause the interaction manager 34 to interact with the computer system 12 with a view to obtaining the facts concerned directly or indirectly through experience. Furthermore, if it is necessary to modify the system 12 being managed in order to complete a task (for example, installation or removal of a service), the inference engine is operative to cause appropriate predefined actions 29 associated with the relevant service model 24 to be initiated via the interaction manager 34.

By way of illustration and using a pseudo natural language, a print spooler service model in respect of a print spooler service named lpSpooler may specify that the service is known to be available if three requirements are met:

IpSpooler service is ok IF:
- a print scheduler is running in respect of IpSpooler, and
- there is a valid default printer device specified for lpSpooler, and
- that default printer device is currently able to print.
The existence and status of the print scheduler are typically facts which are directly obtainable by means of a query and are then stored in the fact base 32. The existence of a valid default printer device for lpSpooler can be ascertained, and its identity obtained via a variable 'pname', as follows:

IpSpooler has a valid default printer device IF:
- lpSpooler has an associated default printer [printer name is put into 'pname'], and
- 'pname' is an acceptable printer name.
The ability of a default printer device to print can be ascertained, in the case where it is connected directly to a work station 14, as follows:

Printer can print IF:
- Printer is accepting print jobs, and
- Printer is enabled.
The ability of the printer to accept print jobs and its enabled/disabled status can be ascertained by means of appropriate queries. In the case where the printer is connected to the network 12 rather than directly to an individual work station, the model is slightly more complex; in this case the physical printer has a 'notional' printer associated with it in the work station 14, and the model becomes:

Printer can print IF:
- 'notional' Printer is accepting print jobs, and
- 'notional' Printer is enabled, and
- 'notional' Printer has a physical printer associated with it, and
- that physical printer is currently able to print.
The ability of the physical printer to print can be ascertained by invoking the printer-can-print model for that device; this procedure is if necessary repeated recursively until the printer-can-print model for a directly-connected printer is invoked (e.g. for a printer connected to a print server), at which point the status of the printer is directly determined.

If it is wished to carry out diagnosis of the print spooler service for a particular print spooler, a diagnosis task program 22 causes the inference engine 30 to examine the print spooler service model 24 and identify all the requirements that must be met. For example, if a user cannot print using the lpSpooler print spooler, then the model states that a print scheduler must be running in respect of lpSpooler, there must be a valid default printer device specified for lpSpooler (i.e. IpSpooler must have an associated default printer with an acecptable printer name), and that default printer device must currently be able to print (i.e. it must be accepting print jobs, and be enabled); the inference engine 30 proceeds, under the control of the diagnosis task program 22, to ascertain which of these requirements is not currently being met.

Should it be desired to add a new print spooler to the system, the configuration task program 22 causes the inference engine 30 to examine the print spooler service model to identify what requirements must be met for the new print spooler to be usable from elsewhere in the computer system 12; these requirements can then be met by appropriate actions on the system.

The task programs 22, service models 24 and queries 28 and actions 29 will all generally be written in a high-level language and compiled to object code for execution.

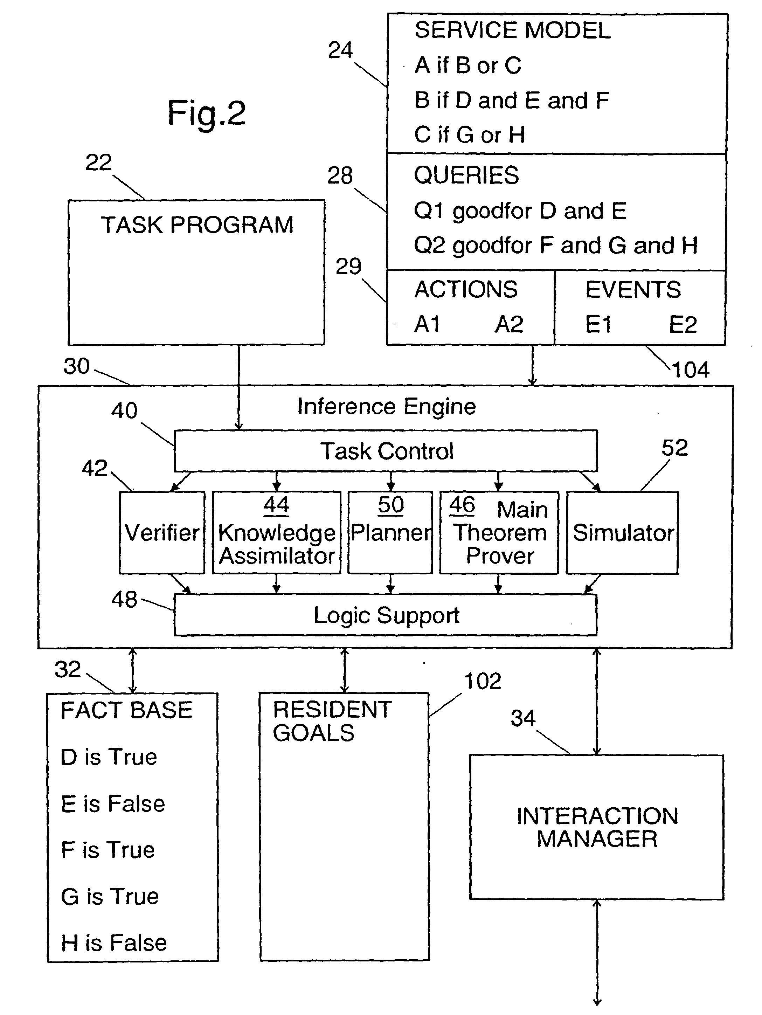

The general form of the inference engine 30 is illustrated in Figure 2. Conceptually, the inference engine comprises a task control layer 40 for controlling the inference engine in accordance with the task program 22 supplied to it; a proof system made up of a verifier 42, a knowledge assimilator 44 and a theorem prover 46; and a logic support layer 48 (providing for unification, predicates and variables) provided by an appropriate language such as Prolog or Smalltalk, both of which are well known to persons skilled in the art.

With regard to the proof system, the verifier 42 uses a closed-world deduction system for which if something cannot be proved true it is assumed to be false; the verifier 42 does not initiate new queries. The verifier 42 is thus useful for discovering what can be true given the current state of knowledge. The knowledge assimilator 44 uses a form of abduction in order to find consistent extensions to the fact base 32 that are sufficient to explain observations arising from the results of queries 28. The main theorem prover 46 is an open-world deduction system that also considers queries; it is the core of the inference engine 30. The role of the task control 40 is to integrate the operation of the elements of the proof system in a manner to produce the resulls desired for the task being effected; generally, however, it may be said that if the theorem prover 46 is unable to prove a particular theorem on the basis of facts currently available in the fact base 32, it will ask the verifier 42 to look at the queries 28 to find one which will provide it with the facts desired, and then once its query has been performed, the knowledge assimilator 44 will extract as much information as possible from the results of the query and store this new information in the fact base 32 for use by the theorem prover 46.

The set of queries 28 associated with each model 24 enables information to be obtained from the system 12 being managed. Each query is 'goodfor' one or more facts (i.e. will enable that fact or facts to be ascertained), and these facts are identified with the query to permit selection of the query appropriate for a desired fact.

A query works by interacting with the system 12 being managed, and then syntactically analysing the resultant response into tokens which are then related to the contents of the associated service model 24. In the present embodiment, the interaction manager 34 is responsible for running the query, whilst further semantic analysis of the response is carried out by the knowledge assimilator 44 which is also responsible for updating the fact base 32.

Three main types of interaction are possible. Firstly, a query may use existing information-providing services of the system 12 to provide directly the required information (though generally packaged with other information and requiring syntactic extraction). Secondly, a query may exercise a particular capability of the system 12 which although not directly supplying the required information enables the knowledge assimilator 44 to infer certain facts from the observed results. Thirdly, it is possible to write specific agent programs running on particular machines of the system being managed, and to arrange for these agents to provide specific answers to particular queries. Whilst such agents could provide powerful analysis tools, the need to add to the system being managed has practical drawbacks and this approach is therefore not preferred.

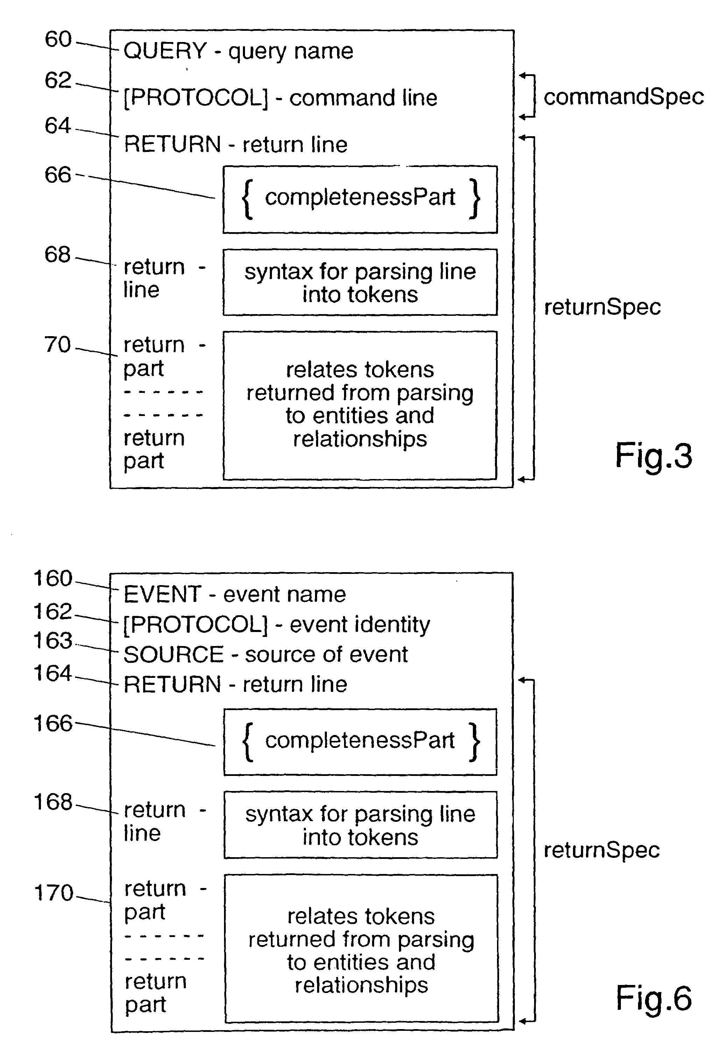

The general format of a query 28 is illustrated in simplified terms in Figure 3. The query 28 is allotted a unique name 60. The action to be performed by the managed system 12 is specified in a command line 62 that constitutes the 'commandSpec' of the query, using a syntax that depends on the particular command or system management language used, which is identified in a prefix shown as [PROTOCOL] in Figure 3. The remaining part of the query is the 'returnSpec' describing what response can be expected to result from the action initiated by the command line 62 and how this response relates to the relevant contents of the associated service model 24. The 'returnSpec' gives the general form of the response ('returnline' 64) in part of a production named RETURN that also contains a list 66 (referred to as the 'completenessPart') specifying the items for which complete information is available. The 'returnline' 64 is then syntactically specified (reference 68) to derive a number of 'returnParts' which are then related to the contents of the service model (reference 70). The facts for which a query is 'goodfor' are implicitly identified in section 70 of the query and typically an explicit list of these facts will be generated when the query is compiled.

A simple example of how the theorem prover 46 carries out reasoning on the basis of the rules given to it in a service model 24 and having regard to facts available in the fact base 32 will now be given.

As described above, each service model 24 contains statements relating to the entity or entities relevant to that model and these statements will generally be used to form a number of conditional relationships between those entities specifying, for example, that a service entity is available if certain conditions are met. Thus, with reference to the service model 24 of Figure 2, there may be truth valued statements A-H in the service model organized into three rules:
A if B or C
B if D and E and F
C if G or H
Statement A represents that the service concerned is available if statement B or statement C is true. The second rule given above then sets out the conditions to be fulfilled for statement B to be true whilst the third rule gives the conditions for statement C to be true.

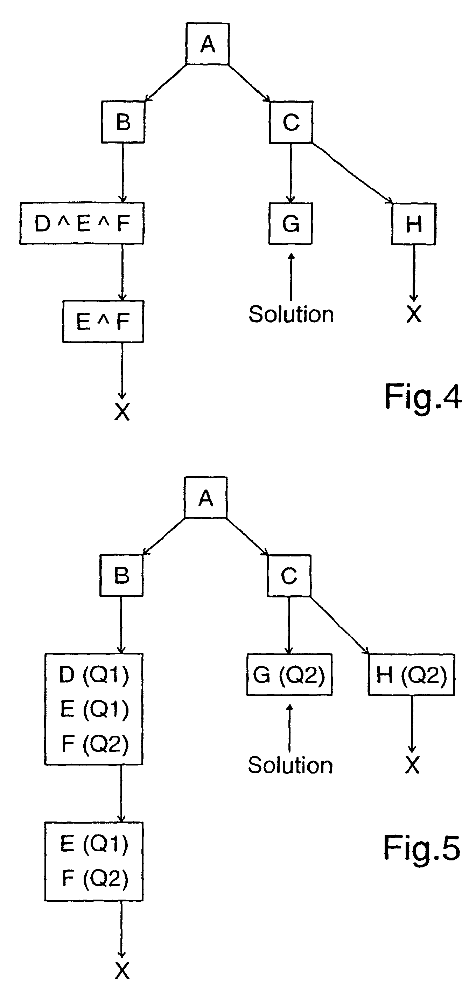

Consider first the situation in which the fact base contains the facts that D, F and G are true but E and H are false. Working with the above rules and these facts, the main theorem prover 46 can now deduce whether or not the service represented by model 24 is available - that is, whether A is true. This proof proceeds as follows (see Figure 4):
(1) Since there is no fact for A but there is a rule, the search for a solution expands into two partial solution nodes.
(2) Now consider B. Again there is no fact, but there is a relevant rule so the search is again expanded.
(3) Now consider D, E, F. There is a fact for D, so the next partial solution is node E, F.
(4) Now consider E, F. E is known to be false, so this branch fails.
(5) Backtracking to the next un-expanded partial solution node (that is, C), there is no fact for C, but there is a rule, so the search is expanded.
(6) Now consider G. This is known to be true, so a solution has been found.

This example is a simple depth-first search over the solution space. Other search strategies are, of course, also possible such as a "best first" strategy.

Consider next the situation where there are no relevant facts in the fact base 32. However, a set of queries is associated with the model 24, providing two queries Q1 and Q2; query Q1 is 'goodfor' (that is, will give the value of) D and E, and Q2 is 'goodfor' F, G and H. In this case, the proof proceeds as follows (see Figure 5):
(1) The proof of A begins as before until the partial solution node D, E, F is reached. This time there is no fact for D but there is a query Q1. So query Q1 is executed and this puts the facts 'D is true' and 'E is false' into the fact base 32, enabling the next partial solution node to be created.
(2) Now consider E, F. There is now a fact for E in the fact base; this fact (E is false) causes this branch to fail.
(3) Backtracking to the next un-expanded partial solution node (that is, C) the search is continued as before.
(4) When G is considered, there is no fact for it, but there is a query Q2. When this is executed the facts 'F is true', 'G is true' and 'H is false' are added to the fact base 32, resulting in a solution.

The selection of the appropriate query and the extraction of information from the result of a query involve the verifier 42 and knowledge assimilator 44.

Actions 29 that may need to be performed in order to enable a particular task to be completed are defined for each service model in much the same way as a query but with a simpler basic format:
- ACTION: - action name
- COMMAND: - command line
- PRE: - preconditions for the action
- POST: - post-conditions (i.e. the effect of the action)
- INVALIDATE: - variables invalidated by the action
The command line will specify a command which can be executed directly by the system 12, together with identifiers for the items to be acted on (for example, the command line may contain a variable of declared type for specifying the machine on which the action is to be carried out). The preconditions specified in PRE are the conditions that must be true before the action can be carried out. The post-conditions specified in POST define the effect of the action; it is these post-conditions that the inference engine 30 will search when seeking to identify the action 29 appropriate to effecting a particular task in relation to the service model 24 for which the action is defined. INVALIDATE identifies the variables invalidated by the action, this information being used to remove from the fact base 32 any facts relying on the invalidated items.

As previously explained, the role of each task program 22 (Figure 1) is to adapt the operation of the inference engine 30 to the task to be performed. An example diagnosis task program is given below in a pseudo natural language form for ease of understanding: 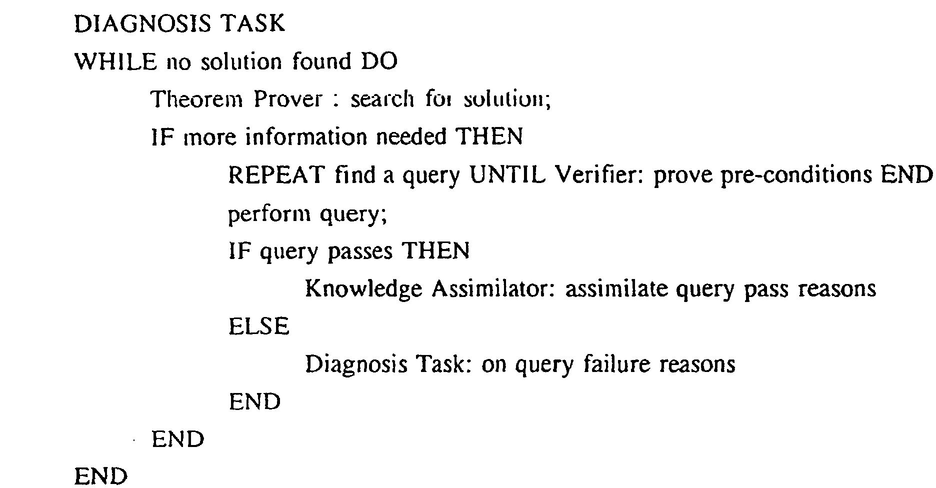 The above task program, which can be used in conjunction with any service model 24, searches for a solution to whether the service concerned (as represented by an entity of the corresponding model) is available. This search will proceed through all the conditions specified in the relationships associated with the relevant service entity until either it is proved that a required condition is not met or it is proved that all conditions are met and the service is available. In conducting the search for a solution, queries may be used to ascertain facts.

Considering the diagnosis task program in more detail, the main theorem power 46 (Figure 2) is first called upon to search for a solution. If during the course of this search the theorem power 46 is unable to proceed because a required fact is not present in the fact base 32, then the verifier 42 is used to select a query 28 that will elicit the desired fact from the system. The selected query is then executed (by the interaction manager 34). If the query is successfully carried out, the results from the query are assimilated into the fact base 32 by the knowledge assimilator 44 and the program then loops for the theorem prover 46 to continue its search using the newly established facts. However, if the query fails (that is, is not successfully executed) then the diagnosis task is recursively called to establish the reason for this failure.

If there is a problem with a service being diagnosed, the above diagnosis task program will terminate when the theorem prover 46 first comes across a fact proving that a requirement for the service to be available has not been met. Because the facts assimilated into the fact base 32 are generally low level facts, the termination of the program at this stage will normally be acceptable, as the termination point will indicate the low-level fact resulting in service non-availability and this fact will generally be readily translatable into the computer system fault (including absence of a resource) concerned. However, where the fact base 32 stores high-level facts it is desirable that the diagnosis task program does not terminate at a high-level fact proving service non-availability, but that it continues to decompose this fact to derive the underlying cause as expressed in a low-level fact. This can be readily achieved by enclosing the above diagnosis task program within a 'WHILE' loop of the form: 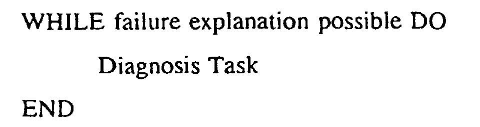 In this case, whenever the core diagnosis task terminates on finding a fact proving service non-availability, it is asked to find a solution proving that fact (and ignoring its presence in the fact base 32). This process repeats until no further explanation is possible (as indicated by the absence of any relevant query 28).

If the above additional WHILE loop is not limited to failure explanation, but is used to explain any solution, then the expanded diagnosis task can also be used to provide a full check on all conditions (high-level and low-level) required for a particular service.

A further example of a task program is given below in relation to a monitoring task:

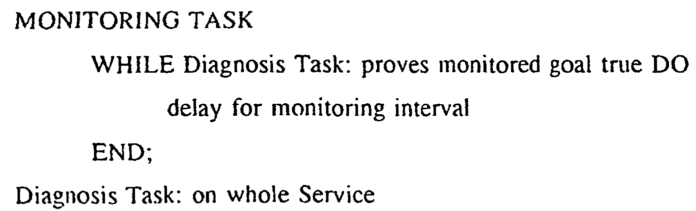

As can be seen, the monitoring task uses the diagnosis task in its implementation.

Specific measures may be taken to ensure, as far as reasonably possible, the validity of any facts held in the fact base 32. For example, each query 28 could be allocated a 'lifetime' being the time for which any facts derived by running the query can be considered valid. At the expiration of the query lifetime, all derivative facts (and any further facts based on them) are deleted from the fact base 32. With such an arrangement, monitoring of system elements can be implemented by using queries 28 to derive facts on those elements, with these queries having a lifetime corresponding to the monitoring interval; upon such a query reaching the end of its life, the facts of interest will be removed from the fact base 32 and this can be used by the monitoring task as a trigger for re-initiating the corresponding query 28.

Further details of the system as so far described are given in WO 94/09 427 (incorporated herein by reference), in particular in relation to the content of service models 24 and queries 28.

The system management apparatus described in WO 94/09 427 and summarized above is able to analyze the operation of the computer system 12, and for example to locate and identify, in response to intervention by the system manager (by activation of the diagnosis task program 22), service-related requirements whose absence is causing failure of a system service.

Additionally the facility for periodically re-executing a query 28 as described above, in response to expiration of the lifetime of the query and deletion from the fact base 32 of the facts derived therefrom, enables for example the status of system elements to be monitored on a continuing basis, and either confirmed as continuing to be available or reported as needing remedial attention by the system manager if re-execution of the query no longer yields facts enabling the availability of the service to be proved.

However it has now been found desirable to provide additional facilities in the system management apparatus 10, to enhance the system's ability to detect changes in the system's status and to provide the possibility of automatic reconfiguration to remedy adverse effects of such changes.

To this end, as shown in Figure 1, the management system 26 of the apparatus according to this invention also includes a resident goals store 102. This store contains assertions of goals that the system should continue to achieve, and which the management system should verify can still be satisfied following the occurrence of events which might affect those goals. The goals will typically depend on lower-level facts in the fact base 32. A report of occurrence of an event will contain information from which one or more of these lower-level facts can be confirmed or contradicted; if a fact is contradicted, consequent updating of the fact base 32 in respect of that fact will trigger re-evaluation of whether a goal which is dependent on that fact can be satisfied.

An example of a resident goal is the continued availability of the print spooler service IpSpooler discussed earlier, the definition of which corresponds to the content of the service model for that service, i.e. (in pseudo natural language):

IpSpooler service is ok IF:
- a print scheduler is running in respect of lpSpooler, and
- there is a valid default printer device specified for lpSpooler, and
- that default printer device is currently able to print.
The basic facts upon which this goal depends include the continued running of the print scheduler, the continued ability of the relevant printer device to accept print jobs, and the continued enabled status of that printer device. When a resident goal is first entered into the resident goal store 102 by the system manager, using the work-station 14, the inference engine 30 attempts to prove that the goal can be satisfied, by reference to the service model 24, the fact base 32 and using queries as described above. In the course of this proof links are established between the goal in the resident goal store 102 and the basic facts upon which it depends, in the fact base 32; however, to conserve system resources, links with any intermediate facts which relate the basic facts to the goal (such as the default printer being able to print) do not need to be stored.

In addition the relevant service model 24 is extended to contain a definition of one or more events 104 the occurrence of which can confirm or contradict a fact in the fact base 32. These events could include the halting of a print scheduler (in case it is the scheduler upon which lpSpooler depends) and a signal that a printer has changed status to disabled (in case it is the default printer for lpSpooler), and these events would be included in the print spooler service model.

The general format of definition of an event 104 is illustrated in Figure 6, and is similar in many respects to the format of a query 28. The event is allotted a unique name 160. The actual nature of the event is identified in an identification line 162, using a syntax that depends on the particular command or system management language used, which is itself identified in a prefix shown as [PROTOCOL] in Figure 6. Thus, if SNMP (Simple Network Management Protocol) is being used, this line might read
SNMP ::= '.1.3.6.1.4.1.11.2.3.9.1.1.2.17.0'
where the string of digits defines an event in accordance with SNMP conventions. A source line 163 identifies the network entity (e.g. a printer device) with which the event in question is associated. The remaining part of the event is the 'returnSpec' describing what information can be expected to be available in connection with the event identified in the identification line 162 and how this information relates to the relevant contents of the associated service model 24. The 'returnSpec' gives the general form of the information ('returnline' 164) in part of a production named RETURN that also contains a list 166 (referred to as the 'completenessPart') specifying the items for which complete information is available (e.g. indicating that if there is no specific indication that an assertion is true, it may be assumed to be definitely false). The 'returnline' 164 is then syntactically specified (reference 168) to derive a number of 'returnParts' which are then related to the contents of the service model (reference 170). The facts which may be derived from the information available for the event are implicitly identified in section 170 of the query and may be extracted by application of an appropriate parser as described below.

When events are specified for monitoring by the system manager, the need for occurrence of those events to be reported to the management system 26 is recorded. In the case of a device or service which supports SNMP this may be done by registering the need for reporting of the event with the device or service (e.g. the need to report change of status to disabled can be registered with a printer device which supports SNMP). If a system entity does not itself have the capability of registering the need to report events (e.g. a simple desktop computer), the event may instead be registered with a system event monitor of known kind which monitors the system for predefined events and provides a report when it detects their occurrence.

Upon occurrence of an event a message reporting it is sent by the device or service in question, or by the system event monitor, to the interaction manager 34. This message will have a syntax determined by the protocol in use (e.g. SNMP), and it is inspected by the interaction manager 34 to identify the kind of message involved. This information is then passed to the inference engine 30.

The knowledge assimilator 44 in the inference engine 30 receives the event message from the interaction manager 34 and applies semantic analysis to the message to identify facts in the fact base 32 to which the message is pertinent. To this end the knowledge assimilator 44 contains stored models of typical messages, and tables of key words and features which may occur in these messages. Comparison of the received message with these models and tables enables the knowledge assimilator to select an appropriate parser matching the structure of the message, with which it analyzes the message to divide it into its constituent elements and identify the basic facts it contains (e.g. the fact that a printer has changed status to disabled).

These extracted basic facts are supplied to the fact base 32 to update its contents. In the case of facts which have been contradicted and upon which one or more goals depend, the links between the updated facts and goals in the resident goals store 102 cause the inference engine 30 to attempt once more to prove that each affected resident goal is still satisfied; this attempted proof involves cooperation of the verifier 42, knowledge assimilator 44 and main theorem prover 46, using queries if necessary, in the same manner as described above. If the resident goal is still satisfied, no further action is needed.

If the attempt by the inference engine 30 to prove satisfaction of a goal following occurrence of an event fails, this engine then endeavours to identify one or more actions 29 which if executed will result in satisfaction of the goal in a different manner. Thus, for example, if the event relates to the default printer device for lpSpooler changing its status to disabled, in which case the lpSpooler resident goal cannot be satisfied as it stands, it may be possible to re-satisfy the goal by changing the default printer device to select another printer which is enabled.

To this end, the inference engine 30 also contains a planner 50 and a simulator 52. Under the coordination of the task control layer 40, the planner 50 examines the actions 29 contained in the relevant service model 24, seeking any whose effect will enable the resident goal to be satisfied. For each action the planner first checks its preconditions against the contents of the fact base 32, to check that the necessary conditions for that action to be carried out are true. If so, the simulator 52 temporarily and reversibly alters the fact base 32 according to the effects defined in the post-conditions associated with the action, to simulate the conditions which would exist following execution of that action. The verifier 42, knowledge assimilator 44 and main theorem prover 46 then test again whether the resident goal would now be satisfied. If the test is unsuccessful the temporary changes to the fact base 32 are reversed, and another candidate action is tested. If a combination of actions is found which is potentially relevant to the resident goal in question, the inference engine 30 examines their pre- and post-conditions to determine the most effective sequence for executing those actions.

If the inference engine 30 successfully locates an appropriate action or combination of actions, it causes the interaction manager 34 to execute those actions on the computer system 12, thereby causing the necessary actual changes in the configuration of the system to re-satisfy the resident goal. On the other hand, if no appropriate action or combination of actions can be found, the diagnosis task program described above can be invoked to provide a description of reasons why the resident goal can no longer be satisfied.

## Claims

1. A system management method of monitoring occurrence of and attempting to remedy effects of events (104) affecting a service provided by a computer system (12) made up of co-operating physical and logical entities, said method comprising:
- providing for said service a declarative model (24) specifying requirements needing to be met for said service to be available, said requirements being set out in terms of the entities required and their inter-relationships;
- specifying in respect of at least one aspect of said service a goal to be satisfied by said system (12), and storing the goal in a goal store (102);
- providing a fact base (32) for holding facts relating to the system (12);
- identifying at least one fact which relates to the system and upon which said goal depends, and including that fact in said fact base (32);
- determining whether the goal is satisfied and thereby establishing at least one link indicating a dependency relationship between said goal and said at least one fact, and including said link in said fact base (32);
- defining at least one event (104) which can occur in the system and whose occurrence in the system can affect validity of said fact; and
- detecting occurrence of said event (104), and thereupon:
- determining whether said fact is valid or invalid;
- if said fact has become invalid, determining whether said goal is still satisfied by performing inferencing operations on the declarative model (24) by referring to said fact base (32) so as to ascertain whether a requirement relevant to said goal is met by the system;
- if said goal is no longer satisfied, seeking an operation which will enable said goal to be re-satisfied;
testing whether the operation will enable said goal to be re-satisfied by temporarily updating said fact base (32) to indicate consequences of effecting that operation, and determining whether said goal is satisfied by reference to said fact base (32) in its temporarily updated state; and
- performing the operation if it re-satisfies said goal.

2. The method of claim 1, wherein the step of determining whether said goal is satisfied is performed when said goal is first provided, wherein said links are established during that step.

3. The method of claim 1 or claim 2, including the step of inspecting said fact base (32) for any link relating to a fact when that fact is updated, and, if such a link is found, determining whether a goal indicated by that link is still satisfied.

4. The method of any one of the preceding claims, including the step of analysing occurrence of said event (104) to identify and establish validity of a fact related to the event (104).

5. The method of any one of the preceding claims, including the step of providing a description of reasons for a goal not being satisfied, if no operation can be found which will enable said goal to be re-satisfied.

6. System management apparatus for monitoring occurrence of and attempting to remedy effects of events (104) affecting a service intended to be provided by a computer system (12) made up of co-operating physical and logical entities, said apparatus comprising:
- a declarative model (24) specifying requirements needing to be met for said service to be available, said requirements being set out in terms of the entities required and their inter-relationships;
- an inference engine (30) for carrying out inferencing operations in relation to said declarative model (24);
- a goal store (102) containing a specification of a goal to be satisfied by said system in respect of at least one aspect of said service;
- a fact base (32) for holding facts relating to the system (12);
- an identification of at least one fact which relates to the system (12) and upon which said goal depends, said fact being included in said fact base (32);
- at least one link included in said fact base (32), said link being established by determining whether said goal is satisfied and indicating a dependency relationship between said goal and said at least one fact,
- a definition of at least one event (104) which can occur in the system and whose occurrence in the system can affect validity of said fact; and
- the inference engine (30) being arranged to detect occurrence of said event (104), said inference engine (30) comprising:
- determining means (42,44) for determining whether said fact is valid or invalid;
- causing means arranged to cause said inference engine (30) to perform inferencing operations on the declarative model (24), to cause reference to be made to said fact base (32) for ascertaining whether a requirement relevant to said goal is met by the system (12), and to determine whether said goal is still satisfied, if said fact has become invalid; and
- enabling means (50) arranged to seek an operation for enabling said goal to be re-satisfied if said goal is no longer satisfied by using a simulator (52) arranged to test whether the operation will enable said goal to be re-satisfied by temporarily updating said fact base (32) to indicate consequences of effecting that operation, and to determine whether said goal is satisfied by reference to said fact base (32) in its temporarily updated state the apparatus further comprising performing means (34) for performing said operation if it re-satisfies said goal.

7. The system management apparatus of Claim 6, wherein the inference engine (30) is arranged to determine whether said goal is satisfied when said goal is first provided, wherein said at least one link is established during that time.

8. The system management apparatus of Claim 6 or 7, wherein the inference engine (30) is arranged to inspect said fact base (32) for any link relating to a fact when that fact is updated, and to determining whether a goal indicated by that link is still satisfied if such a link is found.

9. The system management apparatus of any of Claims 6 to 8, wherein the inference engine (30) is arranged to analyse the occurrence of said event and to identify and establish validity of a fact related to the event.

10. The system management apparatus of any of Claims 6 to 9, further comprising means for providing a description of reasons for a goal not being satisfied, if no operation can be found which will enable said goal to be re-satisfied.

## Patentansprüche

1. Ein Systemverwaltungsverfahren zum Überwachen des Auftretens von und Versuchen des Beseitigens von Auswirkungen von Ereignissen (104), die einen Dienst beeinträchtigen, der durch ein Computersystem (12) bereitgestellt wird, das aus zusammenwirkenden physischen und logischen Entitäten besteht, wobei das Verfahren folgende Schritte aufweist:
- Bereitstellen eines Vereinbarungsmodells (24) für den Dienst, das Anforderungen spezifiziert, die erfüllt werden müssen, damit der Dienst verfügbar ist, wobei die Anforderungen im Hinblick auf die Entitäten aufgezeigt sind, die benötigt werden, und auf ihre Zwischenbeziehungen;
- Spezifizieren eines Ziels im Hinblick auf zumindest einen Aspekt des Diensts, das durch das System (12) erfüllt werden soll, und Speichern des Ziels in einem Zielspeicher (102);
- Bereitstellen einer Faktenbasis (32) zum Halten von Fakten, die sich auf das System (12) beziehen;
- Identifizieren von zumindest einem Faktum, das sich auf das System bezieht und von dem das Ziel abhängt, und Einfügen dieses Faktums in die Faktenbasis (32);
- Bestimmen, ob das Ziel erfüllt wird, und dadurch Einrichten von zumindest einer Verknüpfung, die eine Abhängigkeitsbeziehung zwischen dem Ziel und dem zumindest einem Faktum anzeigt, und Einfügen der Verknüpfung in die Faktendatenbank (32);
- Definieren von zumindest einem Ereignis (104), das in dem System auftreten kann und dessen Auftreten in dem System die Gültigkeit des Faktums beeinträchtigen kann; und
- Erfassen des Auftretens des Ereignisses (104), und daraufhin:
- Bestimmen, ob das Faktum gültig oder ungültig ist;
- wenn das Faktum ungültig geworden ist, Bestimmen, ob das Ziel weiterhin erfüllt wird, durch Durchführen von Folgerungsoperationen an dem Vereinbarungsmodell (24) durch Bezugnahme auf die Faktenbasis (32), um sicherzustellen, ob eine Anforderung, die für das Ziel relevant ist, durch das System erfüllt wird;
- wenn das Ziel nicht mehr erfüllt wird, Suchen einer Operation, die ermöglicht, dass das Ziel wieder erfüllt wird;
- Testen, ob die Operation ermöglicht, dass das Ziel wieder erfüllt wird, durch temporäres Aktualisieren der Faktenbasis (32), um Konsequenzen des Bewirkens dieser Operation anzuzeigen, und Bestimmen, ob das Ziel erfüllt wird, durch Bezugnahme auf die Faktenbasis (32) in ihrem temporär aktualisierten Zustand; und
- Durchführen der Operation, wenn dieselbe das Ziel wieder erfüllt.

2. Das Verfahren gemäß Anspruch 1, bei dem der Schritt des Bestimmens, ob das Ziel erfüllt wird, durchgeführt wird, wenn das Ziel zum ersten Mal geliefert wird, wobei die Verknüpfungen während dieses Schrittes eingerichtet werden.

3. Das Verfahren gemäß Anspruch 1 oder Anspruch 2, das den Schritt des Inspizierens der Faktenbasis (32) nach einer Verknüpfung umfasst, die sich auf ein Faktum bezieht, wenn das Faktum aktualisiert wird, und wenn eine solche Verknüpfung gefunden wird, das Bestimmen, ob ein Ziel, das durch diese Verknüpfung angezeigt wird, weiterhin erfüllt wird.

4. Das Verfahren gemäß einem der vorhergehenden Ansprüche, das den Schritt des Analysierens des Auftretens des Ereignisses (104) umfasst, um die Gültigkeit eines Faktums zu identifizieren und einzurichten, das sich auf das Ereignis (104) bezieht.

5. Das Verfahren gemäß einem der vorhergehenden Ansprüche, das den Schritt des Bereitstellens einer Beschreibung von Gründen dafür umfasst, dass ein Ziel nicht erfüllt wird, wenn keine Operation gefunden werden kann, die ermöglicht, dass das Ziel wieder erfüllt wird.

6. Systemverwaltungsvorrichtung zum Beobachten des Auftretens von und zum Versuchen des Beseitigens von Auswirkungen von Ereignissen (104), die einen Dienst beeinträchtigen, der durch ein Computersystem (12) bereitgestellt werden soll, das aus zusammenwirkenden physischen und logischen Entitäten besteht, wobei die Vorrichtung folgende Merkmale aufweist:
- ein Vereinbarungsmodell (24), das Anforderungen spezifiziert, die erfüllt werden müssen, damit der Dienst verfügbar ist, wobei die Anforderungen im Hinblick auf die Entitäten aufgezeigt werden, die erforderlich sind, und auf ihre Zwischenbeziehungen;
- eine Folgerungsmaschine (30) zum Ausführen von Folgerungsoperationen in Bezug auf das Vereinbarungsmodell (24);
- einen Zielspeicher (102), der eine Spezifizierung eines Ziels enthält, das durch das System erfüllt werden soll, im Hinblick auf zumindest einen Aspekt des Diensts;
- eine Faktenbasis (32) zum Halten von Fakten, die sich auf das System (12) beziehen;
- eine Identifizierung von zumindest einem Faktum, das sich auf das System (12) bezieht und von dem das Ziel abhängt, wobei das Faktum in der Faktenbasis (32) umfasst ist;
- zumindest eine Verknüpfung, die in der Faktenbasis (32) umfasst ist, wobei die Verknüpfung eingerichtet wird, durch Bestimmen, ob das Ziel erfüllt ist, und Anzeigen einer Abhängigkeitsbeziehung zwischen dem Ziel und dem zumindest einem Faktum;
- eine Definition von zumindest einem Ereignis (104), das in dem System auftreten kann und dessen Auftreten in dem System die Gültigkeit des Faktums beeinträchtigen kann; und
- die Folgerungsmaschine (30), die angeordnet ist, um das Auftreten des Ereignisses (104) zu erfassen, wobei die Folgerungsmaschine (30) folgende Merkmale aufweist:
- eine Bestimmungseinrichtung (42, 44) zum Bestimmen, ob das Faktum gültig oder ungültig ist;
- eine Verursachungseinrichtung, die angeordnet ist, um zu verursachen, dass die Folgerungsmaschine (30) Folgerungsoperationen an dem Vereinbarungsmodell (42) ausführt, um zu verursachen, dass eine Bezugnahme auf die Faktenbasis (32) durchgeführt wird, zum Sicherstellen, ob eine Anforderung, die für das Ziel relevant ist, durch das System (12) erfüllt wird, und um zu bestimmen, ob das Ziel weiterhin erfüllt wird, wenn das Faktum ungültig geworden ist; und
- eine Ermöglichungseinrichtung (50), die angeordnet ist, um eine Operation zu suchen, um zu ermöglichen, dass das Ziel wieder erfüllt wird, wenn das Ziel nicht mehr erfüllt wird, durch Verwenden eines Simulators (52), der angeordnet ist, um zu testen, ob die Operation ermöglicht, dass das Ziel wieder erfüllt wird, durch temporäres Aktualisieren der Faktenbasis (32), um Konsequenzen des Bewirkens dieser Operation anzuzeigen, und um zu bestimmen, ob das Ziel erfüllt wird, durch Bezugnahme auf die Faktenbasis (32) in ihrem temporär aktualisierten Zustand;
wobei die Vorrichtung ferner eine Ausführungseinrichtung (34) aufweist, zum Ausführen der Operation, wenn diese das Ziel wieder erfüllt.

7. Die Systemverwaltungsvorrichtung gemäß Anspruch 6, bei der die Folgerungsmaschine (30) angeordnet ist, um zu bestimmen, ob das Ziel erfüllt wird, wenn das Ziel zum ersten Mal bereitgestellt wird, wobei die zumindest eine Verknüpfung während dieser Zeit eingerichtet wird.

8. Die Systemverwaltungsvorrichtung gemäß Anspruch 6 oder 7, bei der die Folgerungsmaschine (30) angeordnet ist, um die Faktenbasis (32) nach einer Verknüpfung zu inspizieren, die sich auf ein Faktum bezieht, wenn das Faktum aktualisiert ist, und um zu bestimmen, ob ein Ziel, das durch die Verknüpfung angezeigt wird, weiter erfüllt wird, wenn eine solche Verknüpfung gefunden wird.

9. Die Systemverwaltungsvorrichtung gemäß einem der Ansprüche 6 bis 8, bei der die Folgerungsmaschine (30) angeordnet ist, um das Auftreten des Ereignisses zu analysieren und um die Gültigkeit eines Faktums zu identifizieren und einzurichten, das sich auf das Ereignis bezieht.

10. Die Systemverwaltungsvorrichtung gemäß einem der Ansprüche 6 bis 9, die ferner eine Einrichtung aufweist zum Bereitstellen einer Beschreibung von Gründen dafür, dass ein Ziel nicht erfüllt wird, wenn keine Operation gefunden werden kann, die ermöglicht, dass das Ziel wieder erfüllt wird.

## Revendications

1. Un procédé de gestion de système pour surveiller l'apparition d'événements (104) qui affectent un service fourni par un système informatique (12) constitué d'entités physiques et logiques coopérantes, et pour tenter de remédier aux effets de ces événements, ledit procédé comprenant les étapes consistant à:
- fournir pour ledit service un modèle déclaratif (24) qui spécifie des exigences qui doivent être satisfaites pour que ledit service soit disponible, lesdites exigences étant exposées en termes des entités requises et de leurs relations mutuelles;
- spécifier en ce qui concerne au moins un aspect dudit service un but à satisfaire par ledit système (12), et enregistrer le but dans un enregistrement (102) de buts;
- fournir une base de faits (32) pour retenir des faits relatifs au système (12);
- identifier au moins un fait qui est relatif au système et dont le but dépend, et inclure ce fait dans ladite base de faits (32);
- déterminer si le but est satisfait et établir ainsi au moins une liaison qui indique une relation de dépendance entre ledit but et ledit fait au moins un, et inclure ladite liaison dans ladite base de faits (32);
- définir au moins un événement (104) qui peut apparaître dans le système et dont l'apparition dans le système peut affecter la validité dudit fait; et
- détecter une apparition dudit événement (104) et, en réponse,
- déterminer si ledit fait est valide ou invalide;
- si ledit fait est devenu invalide, déterminer si ledit but est encore satisfait en exécutant des opérations d'inférence sur le modèle déclaratif (24) en se référant à ladite base de faits (32) afin de constater si une exigence ayant rapport audit but est satisfaite par le système;
- si ledit but n'est plus satisfait, rechercher une opération qui permette que ledit but soit de nouveau satisfait;
- tester si l'opération permettra que ledit but soit de nouveau satisfait en mettant temporairement à jour ladite base de faits (32) pour indiquer des conséquences de la mise en oeuvre de cette opération, et déterminer si ledit but est satisfait en se référant à ladite base de faits (32) dans son état temporairement mis à jour; et
- exécuter l'opération si elle satisfait de nouveau ledit but.

2. Le procédé selon la revendication 1, dans lequel l'étape consistant à déterminer si ledit but est satisfait est exécutée lorsque ledit but est fourni en premier lieu, lesdites liaisons étant établies pendant cette étape.

3. Le procédé selon la revendication 1 ou la revendication 2, qui inclut l'étape consistant à inspecter ladite base de faits (32) pour trouver toute liaison relative à un fait lorsque ce fait est mis à jour, et déterminer, si une telle liaison est trouvée, si un but indiqué par cette liaison est encore satisfait.

4. Le procédé selon l'une quelconque des revendications précédentes qui inclut l'étape consistant à analyser une apparition dudit événement (104) pour identifier et établir la validité d'un fait lié à l'événement (104).

5. Le procédé selon l'une quelconque des revendications précédentes qui inclut l'étape consistant à fournir une description de raisons pour lesquelles un but ne serait pas satisfait, si aucune opération qui permette que ledit but soit satisfait de nouveau ne peut être trouvée.

6. Appareil de gestion de système pour surveiller l'apparition d'événements (104) qui affectent un service fourni par un système informatique (12) constitué d'entités physiques et logiques coopérantes, et pour tenter de remédier aux effets de ces événements, ledit appareil comprenant:
- un modèle déclaratif (24) qui spécifie des exigences qui doivent être satisfaites pour que ledit service soit disponible, lesdites exigences étant exposées en termes des entités requises et de leurs relations mutuelles;
- un moteur d'inférence (30) pour effectuer des opérations d'inférence en relation avec ledit modèle déclaratif (24);
- un enregistrement (102) de buts contenant une spécification d'un but à satisfaire par ledit système en ce qui concerne au moins un aspect dudit service;
- une base de faits (32) pour contenir des faits relatifs au système (12);
- une identification d'au moins un fait qui est relatif au système (12) et dont ledit but dépend, ledit fait étant inclus dans ladite base de faits (32);
- au moins une liaison incluse dans ladite base de faits (32), ladite liaison étant établie en déterminant si ledit but est satisfait et en indiquant une relation de dépendance entre ledit but et ledit au moins un fait ;
- une définition d'au moins un événement (104) qui peut apparaître dans le système et dont l'apparition dans le système peut affecter la validité dudit fait; et
- le moteur d'inférence (30) étant agencé pour détecter l'apparition dudit événement (104), ledit moteur d'inférence (30) comprenant:
- un moyen de détermination (42, 44) pour déterminer si ledit fait est valide ou invalide;
- un moyen destiné à provoquer une exécution d'opérations, qui provoque l'exécution d'opérations d'inférence sur le modèle déclaratif (24) par ledit moteur d'inférence (30), pour amener une référence à être effectuée à ladite base de faits (32) afin de constater si une exigence ayant rapport audit but est satisfaite par le système (12), et pour déterminer, si ledit fait est devenu invalide, si ledit but est encore satisfait;
- un moyen de validation (50) agencé pour chercher une opération qui permette audit but d'être de nouveau satisfait si ledit but n'est plus satisfait en utilisant un simulateur (52) agencé pour tester si l'opération permettra audit but d'être satisfait de nouveau en mettant temporairement à jour ladite base de faits (32) pour indiquer des conséquences de la mise en oeuvre de cette opération, et pour déterminer si ledit but est satisfait par référence à ladite base de faits (32) dans son état mis à jour temporairement;
- l'appareil comprenant en outre un moyen d'exécution (34) pour exécuter ladite opération si elle satisfait de nouveau ledit but.

7. L'appareil de gestion de système selon la revendication 6, dans lequel le moteur d'inférence (30) est agencé pour déterminer si ledit but est satisfait lorsque ledit but est fourni en premier lieu, ladite première liaison étant établie pendant ce temps.

8. L'appareil de gestion de système selon la revendication 6 ou 7 dans lequel le moteur d'inférence (30) est agencé pour inspecter ladite base de faits (32) quant à toute liaison relative à un fait lorsque ce fait est mis à jour, et pour déterminer si un but indiqué par cette liaison est encore satisfait si une telle liaison est trouvée.

9. L'appareil de gestion de système selon l'une quelconque des revendications 6 à 8 dans lequel le moteur d'inférence (30) est agencé pour analyser l'apparition dudit événement et pour identifier et établir la validité d'un fait lié à l'événement.

10. L'appareil de gestion de système selon l'une quelconque des revendications 6 à 9, qui comprend en outre un moyen de fourniture d'une description de raisons pour lesquelles un but ne serait pas satisfait, si aucune opération ne peut être trouvée qui permette que ledit but soit de nouveau satisfait.
